# EUROPÄISCHE PATENTSCHRIFT

(11) **EP 3 218 138 B1**
(45) Veröffentlichungstag und Bekanntmachung des Hinweises auf die Patenterteilung: **16.10.2019**
(21) Anmeldenummer: 15805116.9
(22) Anmeldetag: 12.11.2015
(51) Int. Cl.: B23K 20/12, B23K 9/08

(54) **PRESSSCHWEISSVORRICHTUNG UND PRESSSCHWEISSVERFAHREN**
PRESSURE WELDING DEVICE AND PRESSURE WELDING METHOD
DISPOSITIF ET PROCÉDÉ DE SOUDAGE PAR PRESSION

(30) Priorität: 12.11.2014 DE 202014105432 U
(43) Veröffentlichungstag der Anmeldung: 20.09.2017
(73) Patentinhaber: KUKA Deutschland GmbH, 86165 Augsburg (DE)
(72) Erfinder: BÜCHLER, Michael, 86179 Augsburg (DE); FISCHER, Otmar, 86150 Augsburg (DE)
(74) Vertreter: Ernicke, Klaus Stefan
(86) Internationale Anmeldenummer: PCT/EP2015/076392
(87) Internationale Veröffentlichungsnummer: WO 2016/075218

(56) Entgegenhaltungen:
- WO-A1-2005/002774
- DE-A1- 19 902 357
- DE-A1-102007 019 588
- DE-U1-202004 010 386
- GB-A- 1 053 233
- GB-A- 1 097 233
- US-A1- 2007 051 776
- US-A1- 2009 200 356

## Beschreibung

Die Erfindung betrifft eine Pressschweißvorrichtung und ein Pressschweißverfahren mit den Merkmalen im Oberbegriff des Verfahrens- und Vorrichtungshauptanspruchs.

Die US 2009/0200356 A1 zeigt eine Pressschweißvorrichtung in Form einer Reibschweißvorrichtung mit einer Plastifizierungseinrichtung, einer Staucheinrichtung, einer Halterung für die zu verschweißenden Bauteile und einem Maschinengestell. Die Reibschweißvorrichtung weist einen stationären Stauchkopf und einen längs einer Maschinenachse am Maschinengestell verfahrbaren Maschinenkopf auf, der von einem rückseitigen gestellfesten Antrieb mit zwei Schraubspindeln vorgeschoben wird. Die Halterung für die zu verschweißenden Bauteile beinhaltet eine Bauteilaufnahme am beweglichen Maschinenkopf und eine Bauteilaufnahme am stationären Stauchkopf. Für eine Anpassung an unterschiedliche Maße, insbesondere Bauteillängen ist ein manueller und aufwändiger Umbau erforderlich.

Eine andere Pressschweißvorrichtung ist aus der DE 103 30 188 A1 bekannt. Sie weist eine Plastifizierungseinrichtung und eine Staucheinrichtung sowie eine Halterung für die zu verschweißenden Bauteile und ein Maschinengestell auf. Ferner besitzt sie einen Maschinenkopf und einen Stauchkopf, die längs einer Maschinenachse relativ zueinander beweglich sind. Der Maschinenkopf ist stationär am Maschinengestell angeordnet. Der Stauchkopf ist als Stauchstempel ausgebildet, der von einem am anderen Maschinengestellende stationär angeordneten und abgestützten Stauchantrieb beaufschlagt wird. Für eine Anpassung an unterschiedliche Maße, insbesondere Bauteillängen ist ebenfalls ein manueller und aufwändiger Umbau erforderlich.

Die GB 1 097 233 A lehrt eine Reibschweißvorrichtung mit einer Plastifizierungseinrichtung, einer Staucheinrichtung und einer Halterung für die zu verschweißenden Bauteile. Die Reibschweißvorrichtung weist zwei hintereinander angeordnete stationäre Querköpfe und einen relativ dazu verfahrbaren Maschinenkopf mit zwei beidseits am Maschinenkopf angeordneten hydraulische Antrieben auf. Der Maschinenkopf ist auf den mit den Querköpfen fest verbundenen Kolbenstangen gleitend geführt. Die Halterung für die zu verschweißenden Bauteile beinhaltet eine Bauteilaufnahme am beweglichen Maschinenkopf und eine Bauteilaufnahme am vorderen stationären Querkopf. Am hinteren Querkopf ist eine Endanschlag angeordnet. Unterschiedliche Bauteilmaße, insbesondere Bauteillängen erfordern ebenfalls einen manuellen und aufwändigen Umbau.

Es ist Aufgabe der vorliegenden Erfindung, eine verbesserte Pressschweißtechnik aufzuzeigen.

Die Erfindung löst diese Aufgabe mit den Merkmalen im Verfahrens- und Vorrichtungshauptanspruch.

Die beanspruchte Pressschweißtechnik, d.h. die Pressschweißvorrichtung und das Pressschweißverfahren, haben verschiedene Vorteile. Sie bieten einerseits eine Steigerung der Leistungsfähigkeit und der Prozessqualität beim Pressschweißen. Andererseits kann der Automatisierungsgrad und damit auch die Wirtschaftlichkeit verbessert werden. Rüst- und Stillstandszeiten können weitgehend vermieden oder zumindest reduziert werden. Zudem wird die Ergonomie verbessert.

Die beanspruchte Stelleinrichtung erlaubt eine einfache und schnelle Anpassung der Pressschweißvorrichtung an unterschiedliche Bauteilmaße, insbesondere Bauteillängen. Diese Anpassung betrifft insbesondere die zwischen Maschinenkopf und Stauchkopf schwimmfähig angeordnete Bauteilaufnahme. Sie erfolgt automatisch.

Ferner ist die Staucheinrichtung mit einem zwischen dem Maschinenkopf und dem Stauchkopf angeordneten und auf Zug wirkenden Stauchantrieb modifiziert. Dieser weist zwei oder mehr parallele Antriebseinheiten, z.B. Zylinder, auf, die längs und beidseitig neben der Maschinenachse angeordnet sind. Vorzugsweise sind die Zylindergehäuse am bevorzugt stationären Maschinenkopf abgestützt und die ausfahrbahren Kolbenstangen an ihrem freien Ende mit dem Stauchkopf fest verbunden. Die Stauchkräfte werden hierdurch in knickgünstiger Weise als Zugkräfte und nicht mehr als Druckkräfte wie beim Stand der Technik übertragen.

Die Pressschweißvorrichtung weist eine Plastifizierungseinrichtung und eine Staucheinrichtung sowie eine Halterung für die zu verschweißenden Bauteile und ein Maschinengestell sowie einen Maschinenkopf und einen Stauchkopf auf, die längs einer Maschinenachse relativ zueinander beweglich sind, wobei die Staucheinrichtung einen zwischen dem Maschinenkopf und dem Stauchkopf angeordneten und auf Zug wirkenden Stauchantrieb mit zwei oder mehr parallelen Antriebseinheiten aufweist, die längs und beidseitig neben der Maschinenachse angeordnet sind.

Die beanspruchte Ausbildung und Anordnung des Stauchantriebs erlaubt außerdem einen Kraftfluss in einem geschlossenen Kreis und zwischen dem Maschinenkopf und dem Stauchkopf, was für eine verbesserte Kraftabstützung sorgt und unerwünschte Verformungen vermeidet sowie das Maschinengestell entlastet. Durch die unterschiedlichen Höhenlagen der Zylinder, insbesondere ihrer Kolbenstangen, kann die Ergonomie und die Zugänglichkeit am Bedienbereich bzw. an der Bedienseite der Pressschweißvorrichtung verbessert werden. Zudem kann die schwimmend gelagerte Bauteilaufnahme zusätzlich an den Kolbenstangen über Gleitlager geführt werden.

Die Stelleinrichtung weist eine steuerbare und längenveränderliche Koppeleinrichtung zwischen der Bauteilaufnahme und dem Stauchkopf auf, die Abstandsänderungen zwischen dem Stauchkopf und der Bauteilaufnahme für die besagte Anpassung an unterschiedliche Bauteilmaße ermöglicht. Diese Verstellung erfolgt automatisch mit großer Schnelligkeit und Präzision.

Für eine Grobverstellung zur Anpassung an unterschiedliche Längenmaße verschiedener Bauteile kann der Stauchantrieb und eine dadurch bewirkte Fahrbewegung des Stauchkopfes gegenüber der temporär am Maschinengestell fixierten Bauteilaufnahme benutzt werden. Die Koppeleinrichtung, insbesondere die Arretierung des Koppelelements, kann hierfür gesteuert und geöffnet werden. Anschließend wird der entsprechend des neuen Bauteilmaßes geänderte Abstand wieder fixiert.

Kleinere Änderungen der Bauteilmaße können über einen Koppelsteller der Koppeleinrichtung kompensiert werden. Solche Änderungen werden z.B. durch Einlegetoleranzen, Bauteiltoleranzen, insbesondere Längentoleranzen, eine elastische Verkürzung eines Bauteils im Pressschweißprozess oder dgl. hervorgerufen.

Mit der Stelleinrichtung wird eine Optimierung des Pressschweißprozesses und eine optimale Kontaktierung der zu verschweißenden Bauteile und des Stauchkopfes erreicht. Dies ist auch für die Optimierung der Prozessabläufe, insbesondere eine programmierte Steuerung der Plastifizierungs- und Stauchphasen sowie der dabei eintretenden Vorschübe und Bauteilverkürzungen von Vorteil. Dadurch können Schweißteile mit sehr hoher Qualität hergestellt werden. Dies betrifft einerseits die Qualität der Schweißverbindung und andererseits die gleichbleibende Länge der Schweißteile.

Die Pressschweißtechnik kann unterschiedlich ausgebildet sein. Einerseits ist eine Ausgestaltung als Reibschweißvorrichtung und -verfahren möglich. Die Bauteile werden dabei vorzugsweise längs der Maschinenachse ausgerichtet und an ihren einander zugekehrten Stirnrändern durch Reiben plastifiziert und durch anschließendes axiales Stauchen miteinander verbunden. Alternativ ist ein Pressschweißen mit einem umlaufend bewegten Lichtbogen möglich. Der Lichtbogenumlauf kann hierbei durch eine Treibeinrichtung gesteuert werden.

Für die Pressschweißvorrichtung, insbesondere die Reibschweißvorrichtung, können weitere vorteilhafte Ergänzungen durch Zusatzkomponenten vorgenommen werden.

Dies betrifft einerseits eine im Antriebsstrang zwischen Spindelantrieb und Spindel angeordnete Betätigungseinrichtung für eine Spanneinrichtung an der Bauteilaufnahme des Maschinenstocks bzw. Spindelstocks. Hierbei kann das Antriebsmoment über das Antriebsgehäuse eines Betätigungsantriebs weitestgehend verformungsfrei übertragen werden. Somit lassen sich auch sehr hohe Momente in Verbindung mit einer Spannvorrichtungsbetätigung übertragen. Andererseits ist hierdurch ein Direktantrieb möglich, bei dem der Antriebsmotor mit seiner Motorachse im wesentlichen fluchtend mit der Spindelachse ausgerichtet werden kann. Durch die Trennung der Betätigungseinrichtung vom Antriebsmotor kann dieser in beliebiger Weise ausgebildet sein. Dies ermöglicht den Einsatz von kostengünstigen Standardmotoren.

Besonders günstig ist eine Ausbildung des Spindelantriebs als Direktantrieb, wobei der Antriebsmotor mit dem Antriebsstrang und der Maschinenachse fluchten kann. Der Direktantrieb spart das in vielen Fällen bisher übliche Vorgelege mit einem Riementrieb ein. Die Einleitung von Querkräften auf den Antriebsstrang kann vermieden werden. Die Verschleißanfälligkeit wird deutlich gemindert.

Außerdem können im Antriebsstrang weitere Komponenten untergebracht werden, z.B. eine Lammellenbremse und eine Drehkupplung zum Ausgleich von Fluchtungsfehlern.

Ferner ist der Einsatz einer Messeinrichtung mit einer Messwelle im Antriebsstrang möglich, wodurch die Prozessparameter optimal kontrolliert werden können und auch die Steuerung des Pressschweißprozesses genauer und besser erfolgen kann. Die Messeinrichtung kann bei beliebigen Reibschweißvorrichtung eingesetzt und dabei an beliebiger Stelle im Antriebsstrang angeordnet werden. Die Reibschweißvorrichtungen können beliebige Stauchantriebe und Spindelantriebe sowie stationäre oder verfahrbare Maschinenköpfe haben und können auch als Doppelkopf- oder Einkopfmaschinen ausgebildet sein.

Die Pressschweißvorrichtung weist eine Plastifizierungseinrichtung und eine Staucheinrichtung sowie Bauteilaufnahmen für die zu verschweißenden Bauteile und ein Maschinengestell sowie einen Maschinenkopf mit einer drehbaren, angetriebenen Spindel für eine Bauteilaufnahme auf, wobei im Antriebsstrang zwischen dem Spindelantrieb und der Spindel eine Messeinrichtung mit einer Messwelle für die Erfassung des Antriebsmoments und ggf. der Antriebsdrehzahl angeordnet ist.

Ferner kann die Pressschweißvorrichtung eine Bearbeitungseinrichtung, insbesondere eine Abdreheinrichtung, aufweisen.

In den Unteransprüchen sind weitere vorteilhafte Ausgestaltungen der Erfindung angegeben.

Die Erfindung ist in den Zeichnungen beispielhaft und schematisch dargestellt. Im Einzelnen zeigen:
- Figur 1:: eine Pressschweißvorrichtung in einer teilweise geschnittenen Seitenansicht,
- Figur 2 und 3:: verschiedene ausschnittsweise perspektivische Ansichten der Pressschweißvorrichtung von Figur 1,
- Figur 4:: eine Ergänzung der Pressschweißvorrichtung mit einer Betätigungseinrichtung für ein Spannfutter und einem motorischen Direktantrieb,
- Figur 5:: eine Variante der Pressschweißvorrichtung von Figur 1 bis 3 mit einer Messwelle,
- Figur 6:: eine schematische Darstellung einer Stelleinrichtung zur Anpassung an verschiedene Bauteilmaße sowie eine schematische Darstellung einer abgewandelten Pressschweißtechnik mit umlaufend bewegten Lichtbogen und
- Figur 7 bis 10:: einen Funktionsablauf der Stelleinrichtung in mehreren Betriebsschritten.

Die Erfindung betrifft eine Pressschweißvorrichtung (1) und ein Pressschweißverfahren.

Die Pressschweißvorrichtung (1) und das Pressschweißverfahren können unterschiedlich ausgebildet sein. Gemeinsam ist den verschiedenen Varianten eine Plastifizierungseinrichtung (7) und eine Staucheinrichtung (8), mit der die zu verschweißenden Bauteile (2,3) an den einander zugekehrten Seiten oder Rändern aufgeschmolzen oder erweicht und anschließend unter Bildung des Schweißteils (5) gestaucht werden. Die Staucheinrichtung (8) weist hierfür einen Stauchantrieb (22) und einen Stauchkopf (27) auf, der mit einem Stauchanschlag (28) auf ein Bauteil (3) wirkt.

Die Pressschweißvorrichtung (1) weist ferner eine Maschinen- und Prozesssteuerung (nicht dargestellt) auf, die mit den nachfolgend beschriebenen Maschinenkomponenten verbunden ist und diese steuert. Die Maschinen- und Prozesssteuerung ist außerdem mit den nachgenannten Erfassungs-, Detektions- oder Messeinrichtungen verbunden und verarbeitet deren Signale. Sie kann speicherprogrammierbar ausgebildet sein und ein oder mehrere Prozess- oder Ablaufprogramme, eine Technologiedatenbank, Datenspeicher für Programme und aufgenommene Prozessdaten, eine Qualitätsüberwachung nebst Protokollierung oder dgl. beinhalten.

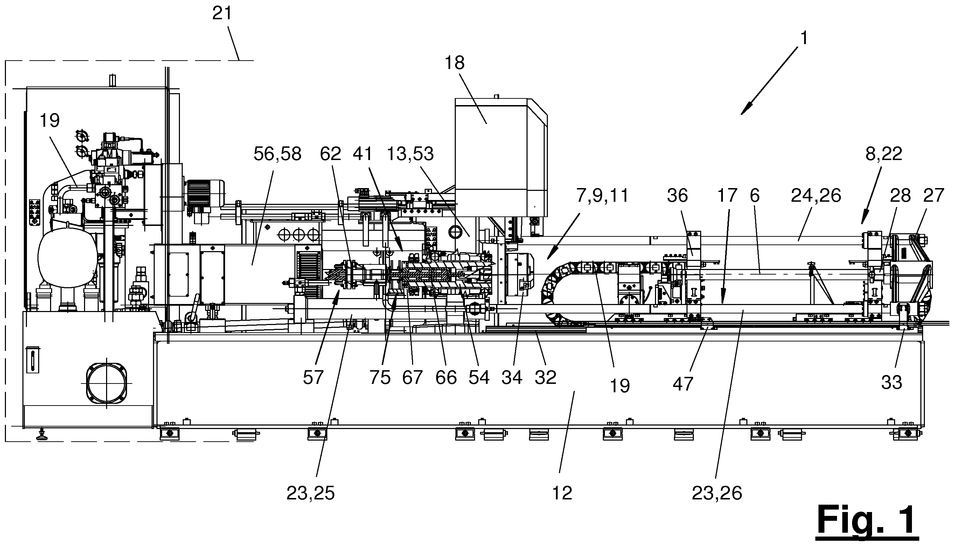

Die Plastifizierungseinrichtung (7) und das Plastifizierungsverfahren können unterschiedlich ausgebildet sein. Bei der in Figur 1 bis 5 gezeigten Ausführungsform ist die Pressschweißvorrichtung (1) als Reibschweißvorrichtung ausgebildet, wobei die Plastifizierungseinrichtung (7) eine Reibeinrichtung (9) aufweist.

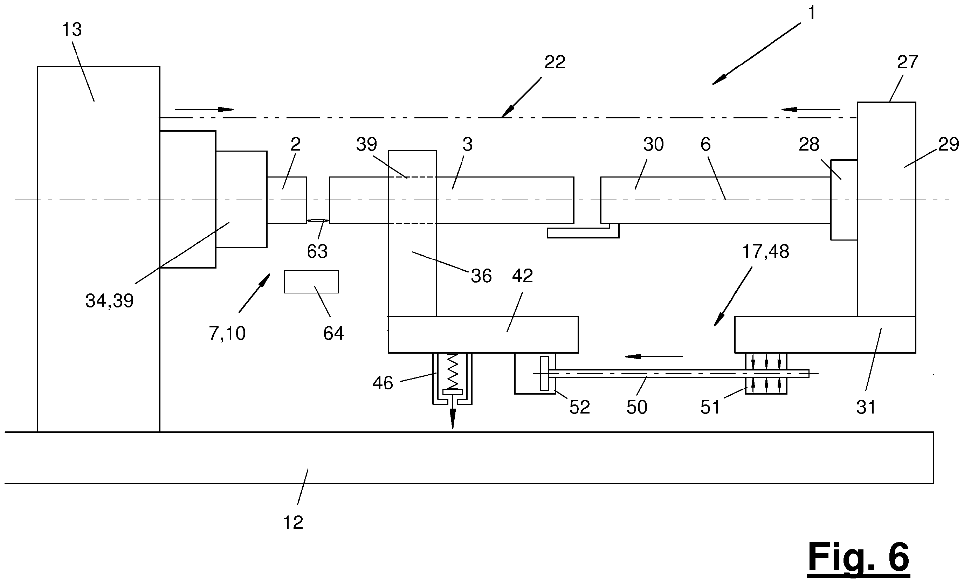

In Figur 6 ist eine Variante angedeutet, in welcher die Bauteilränder mit einem Lichtbogen (63) erwärmt und angeschmolzen werden, welcher mittels einer Treibeinrichtung (64) entlang des Bauteilumfangs umlaufend mit Magnetkraft bewegt wird. Weitere Details werden nachfolgend erläutert.

Die Pressschweißvorrichtung (1) weist in den verschiedenen Varianten jeweils ein Maschinengestell (12) mit einer Längs- oder Maschinenachse (6) und eine Halterung (11) für die zu verschweißenden Bauteile (2,3) auf. Das Maschinengestell (12) hat ein flurgebundenes Maschinenbett, auf dem nachfolgend erläuterten Komponenten der Pressschweißvorrichtung (1) angeordnet sind. Ferner ist eine Betriebsmittelversorgung (19) vorhanden. Sie stellt die benötigten Betriebsmittel, insbesondere elektrischen Strom, Hydraulikflüssigkeit, Druckluft, Schmier- und Kühlmittel oder dgl. zur Verfügung und leitet sie zu den jeweiligen Verbrauchern.

Die Pressschweißvorrichtung (1) hat ein umgebendes schützendes Gehäuse (21) mit einem verschließbaren Zugang an der Bedienseite (20). Hier kann ein Werker, ein Roboter oder dgl. die zu fügenden Bauteile (2,3) zuführen und das fertige Schweißteil (5) abführen.

Das Pressschweißen der Bauteile (2,3) erfolgt in Richtung der Maschinenachse (6), entlang der auch die Bauteile (2,3) ausgerichtet sind. Die Bauteile (2,3) werden dabei an den einander zugekehrten Stirnseiten oder Rändern plasitifiziert, insbesondere durch rotierendes Reiben oder durch den umlaufenden Lichtbogen (63), sowie entlang der Maschinenachse (6) gestaucht. Die Maschinenachse (6) bildet die Prozessachse für das Plastifizieren und Stauchen.

Die Bauteile (2,3) können aus unterschiedlichen Werkstoffen bestehen. Vorzugsweise kommen metallische Werkstoffe, insbesondere Stahl, Leichtmetalllegierungen, Gusslegierungen oder dergleichen zum Einsatz. Die Werkstoffpaarungen können unterschiedlich sein. Hierbei können insbesondere eisenhaltige Werkstoffe mit Nichteisenmetallen gefügt werden. Außerdem können nichtmetallische Werkstoffe, z.B. Keramikwerkstoffe geschweißt werden, insbesondere in Verbindung mit einem anderen metallischen Bauteil.

Die Pressschweißvorrichtung (1) besitzt ferner einen Maschinenkopf (13) mit einer Bauteilaufnahme (34) und dem besagten Stauchkopf (27), die längs der Maschinenachse (6) relativ zueinander beweglich gelagert sind und durch den Stauchantrieb (22) bewegt werden. In den gezeigten Ausführungsbeispielen ist der Maschinenkopf (13) stationär am Maschinengestell (12) angeordnet und abgestützt, wobei der Stauchkopf (27) am Maschinengestell (12) längs der Maschinenachse (6) verfahrbar angeordnet ist.

Die Kinematik kann alternativ umgedreht sein, wobei der Maschinenkopf (13) verfahrbar und der Stauchkopf (27) stationär angeordnet ist. In einer weiteren Variante können beide verfahrbar sein.

Der Stauchkopf (27) ist z.B. jochartig ausgebildet und besitzt einen Träger (31) mit einer Stütze (29), an welcher der Stauchanschlag (28) angeordnet und der Stauchantrieb (22) angebunden ist. Der Träger (31) ist z.B. als Schlitten ausgebildet und ist auf dem Maschinenbett (12) über eine Führung (32) z.B. über beidseitige axiale Führungsschienen, geführt und gelagert. Der Stauchkopf (27) weist ferner eine Erfassungseinrichtung (33) für seine Position und den Fahrweg auf.

Die Erfassungseinrichtung (33) kann z.B. als Wegmesser ausgebildet sein. Dieser kann der Führung (32) zugeordnet sein. Hierbei kann z.B. eine Messschiene am Maschinenbett (12) und ein Messkopf am Stauchkopf (27), insbesondere am Träger (31) angeordnet sein. Der Wegmesser kann in beliebig geeigneter Weise, z.B. optisch, induktiv oder kapazitiv messen. Die Wegmessung kann relativ oder absolut sein.

Die Halterung (11) für die Bauteile (2,3) weist ferner eine zwischen dem Maschinenkopf (13) und dem Stauchkopf (27) schwimmfähig am Maschinengestell (12) gelagerte Bauteilaufnahme (36) auf. Diese dient zur Aufnahme des zweiten Bauteils (3) und wird auch als Zentralaufnahme bezeichnet.

Die Bauteil- oder Zentralaufnahme (36) besitzt ebenfalls einen Träger (42), insbesondere in Form eines Schlittens, der auf dem Maschinengestell (12) in Richtung der Maschinenachse (6) verfahrbar gelagert und geführt ist. Er kann dabei mit dem Stauchkopf (27) auf einer gemeinsamen Führung (32) hintereinander angeordnet sein.

Die Bauteilaufnahme (36) kann mittels einer steuerbaren Fixiereinrichtung (46) bedarfsweise am Maschinenbett (12), insbesondere an der Führung (32) durch Klemmung oder auf andere Weise fixiert werden. Die Bauteilaufnahme (36) weist ebenfalls eine Erfassungseinrichtung (47) für Position und/oder Weg entlang der Maschinenachse (6) auf. Die Erfassungseinrichtungen (33,47) können gleichartig ausgebildet sein und eine gemeinsame Messschiene nutzen.

Die Bauteilaufnahmen (34,36) können das jeweilige Bauteil (2,3) in beliebig geeigneter Weise aufnehmen. Vorzugsweise besitzen sie hierfür jeweils eine fernsteuerbare Spanneinrichtung (39) mit verstellbaren Spannelementen (40) und eine Betätigungseinrichtung (41). Die Spanneinrichtung (39) kann als Spannfutter, ggf. in ein- oder mehrstufiger Ausführung, oder als Zentrumsspanner oder in anderer Weise ausgebildet sein.

Der Stauchkopf (27) wirkt mit dem Stauchanschlag (28) von hinten in Richtung der Maschinenachse (6) auf das Bauteil (3), wobei dies mittels eines direkten Anlagekontakts oder unter Zwischenschaltung einer Stauchstange (30) geschehen kann.

Die Staucheinrichtung (8) wirkt in den gezeigten Ausführungsbeispielen zwischen dem Maschinenkopf (13) und dem Stauchkopf (27) und entwickelt Zugkräfte in Richtung der Maschinenachse (6). Die Staucheinrichtung (8) weist einen Stauchantrieb (22) auf, der zwischen dem Maschinenkopf (13) und dem Stauchkopf (27) angeordnet und mit beiden verbunden ist. Der Stauchantrieb (22) wirkt auf Zug und zieht die Komponenten (13,27) gegeneinander. In der Schemadarstellung von Figur 6 ist dies durch Pfeile dargestellt.

Der Stauchantrieb (22) kann in unterschiedlicher Weise ausgebildet sein. In den gezeigten Ausführungsbeispielen weist er zwei oder mehr parallele Antriebseinheiten (23,24) auf, die längs der Maschinenachse (6) ausgerichtet sind. Die Antriebseinheiten (23,24) sind an verschiedenen Seiten der Maschinenachse (6) angeordnet, insbesondere beidseits und einander diametral zur Maschinenachse (6) gegenüberliegen. Die Antriebseinheiten sind bevorzugt als Zylinder ausgebildet.

Die Antriebseinheiten (23,24) können alternativ in anderer Weise, z.B. als elektrische Stangen- oder Spindelantriebe, ausgebildet sein. Die nachfolgend zu den gezeigten Zylindern (23,24) erläuterten Anordnungen und Ausgestaltungen gelten entsprechend auch für andere Ausführungen von Antriebseinheiten.

Die Zylinder (23,24) sind vorzugsweise als hydraulische Zylinder ausgebildet. Sie weisen jeweils eine ausfahrbare Kolbenstange (26) und ein Zylindergehäuse (25) auf. Die Zylindergehäuse (25), sind bevorzugt am Maschinenkopf (13) montiert und abgestützt. Die freien Enden der ausfahrbaren Kolbenstangen (26) sind am Stauchkopf (27) befestigt. Bei anderen Antriebseinheiten können das Antriebsgehäuse (25) und das ausfahrbare Antriebselement (26), z.B. eine Zahnstange oder eine Gewindespindel, entsprechend angeordnet und verbunden sein.

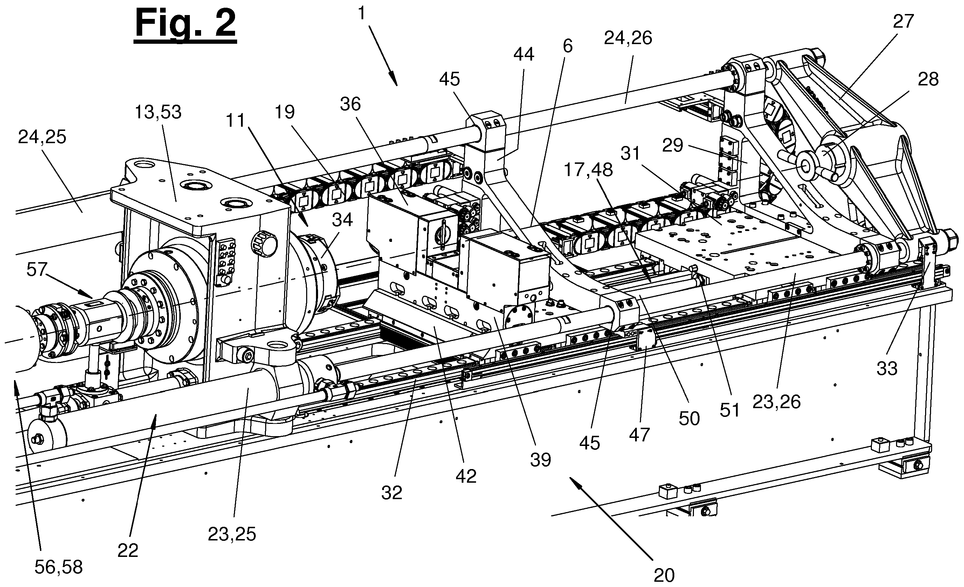

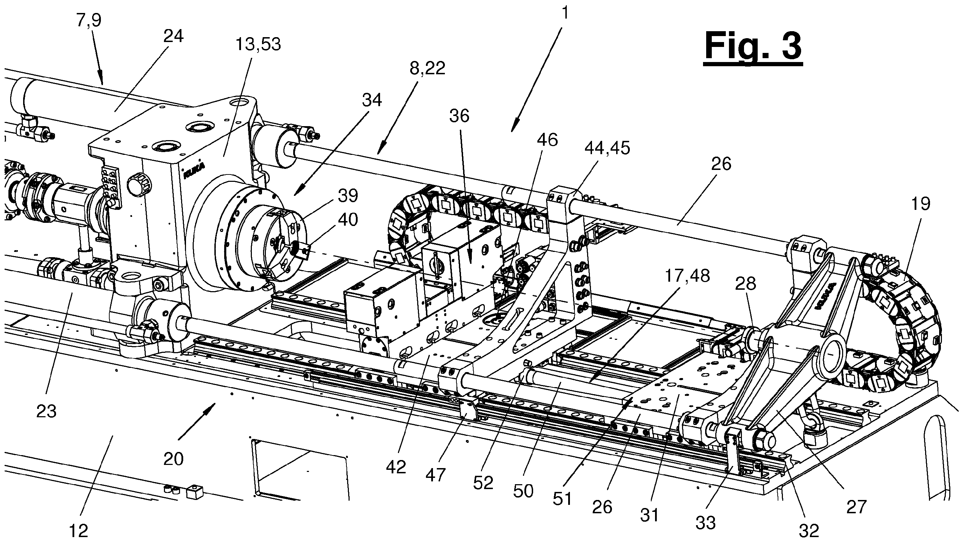

Wie insbesondere Figur 2 und 3 verdeutlichen, weist der Stauchkopf (27) ein Verbindungsjoch zwischen den Kolbenstangenenden auf, an dem auch der Stauchanschlag (28) angeordnet ist. Die Stütze (29) ist vor dem Joch angeordnet und ist ebenfalls mit den Kolbenstangen (26) fest verbunden, insbesondere geklemmt. Die Stütze (29) ist mit dem Träger oder Schlitten (31) verbunden und insbesondere auf diesem aufgesetzt. Das Joch schwebt über dem Träger und ist mit diesem über die Kolbenstangen (26) und die Stütze (29) verbunden. Hierüber erfolgt eine Jochführung am Maschinengestell bzw. Maschinenbett (12) entlang der Maschinenachse (6).

Die zentrale Bauteilaufnahme (36) kann ebenfalls mit dem Stauchantrieb (22), insbesondere mit den Kolbenstangen (26), verbunden werden. Auf dem Träger oder Schlitten (42) ist hierfür eine Stütze (44) befestigt, die über Gleitlager (45) mit den Kolbenstangen (26) verbunden ist. Hierüber erfolgt eine zusätzliche Führung entlang der Maschinenachse (6). Diese Ausgestaltung bietet auch eine Führung und Abstützung für den Stauchantrieb (22), insbesondere die Kolbenstangen (26).

Bei den gezeigten Ausführungsformen des Stauchantriebs (22) sind die Antriebselemente, insbesondere Zylinder (23,24) auf unterschiedlichen Höhen über dem Maschinenbett (12) angeordnet. Der dem Bedienbereich bzw. der Bedienseite (20) benachbarte Zylinder (23) ist dabei tief und knapp über der Oberseite des Maschinenbetts (12) angeordnet. Er behindert dadurch nicht den Zugang des Werkers zu den Bauteilaufnahmen (34,36). Der andere, jenseitige Zylinder (24) ist auf der anderen Seite des Maschinenkopfes (13) und in einer höheren Position über dem Maschinenbett (12) angeordnet. Durch die verschiedenen Höhenlagen der Zylinder (23,24) und ihrer Kolbenstangen (26) ergibt sich eine schräge Lage des Jochs am Stauchkopf (27). Ferner haben auch die Stützen (29,44) eine entsprechend abgewinkelte Form und eine unterschiedliche Höhenlage der Gleitlager (45) bzw. der Fixier- oder Klemmstellen an den Kolbenstangen (26). Die abgewinkelte Stützenform gibt andererseits für die Bauteile (2,3) genügend Freiraum.

Die Pressschweißvorrichtung (1) weist in den verschiedenen Ausführungsformen jeweils eine Stelleinrichtung (17) zur Anpassung an unterschiedliche Bauteilmaße, insbesondere Bauteillängen, auf. Die Stelleinrichtung (17) funktioniert vorzugsweise automatisch. Die Anpassung erfolgt bevorzugt über eine Verstellung der zentralen Bauaufnahme (36).

Die Stelleinrichtung (17) weist eine steuerbare und längenveränderliche Koppeleinrichtung (48) zwischen der zentralen Bauteilaufnahme (36) und dem Stauchkopf (27) auf. Die Koppeleinrichtung (48) sorgt für eine Verbindung der Komponenten (36,27) in Richtung der Maschinenachse (6) und ist vorzugsweise mit deren Trägern (31,42) verbunden. Mit der Stelleinrichtung (17) und insbesondere deren Koppeleinrichtung (48) kann in der nachfolgend beschriebenen Weise der Abstand zwischen der Bauteilaufnahme (36) und dem Stauchkopf (27) in Richtung der Maschinenachse (6) verändert und bedarfsweise angepasst werden.

Die Koppeleinrichtung (48) weist ein Koppelelement (50) auf, das zwischen der Bauteilaufnahme (36) und dem Stauchkopf (27) angeordnet und mit beiden verstellbar verbunden ist. Das Koppelelement (50) ist z.B. als einzeln oder mehrfach angeordnete Koppelstange ausgebildet und erstreckt sich vorzugsweise längs der Maschinenachse (6). Die Koppeleinrichtung (48) weist ferner eine Arretierung (51) und einen Koppelsteller (52) auf.

Das Koppelelement (50), insbesondere die Koppelstange, ist am einen Endbereich an der Arretierung (51) längsbeweglich und mit einer steuerbaren Klemmung aufgenommen. Die Arretierung (51) ist z.B. am Stauchkopf (27), insbesondere an dessen Träger (31), angeordnet. Die Arretierung (51) kann z.B. als steuerbare Stangenklemmung ausgeführt sein. Bei geöffneter Klemmung kann das Koppelelement (50) relativ zur Arretierung (51) axial verschoben und hierdurch der besagte Abstand geändert werden.

Am anderen Endbereich ist das Koppelelement (50) mit dem Koppelsteller (52) verbunden. Der Koppelsteller (52) ist z.B. an der Bauteilaufnahme (36), insbesondere an deren Träger (42), angeordnet. Die Koppeleinrichtung (48) ist bevorzugt unterhalb der Träger (31,42) angeordnet und befindet sich in einem Freiraum an der Oberseite des Maschinenbetts (12). Der Koppelsteller (52) weist einen Antrieb auf, mit dem er das Koppelelement (50) bedarfsweise längs der Maschinenachse (6) verstellen oder in der vorhandenen Lage blockieren kann.

Der Koppelsteller (52) bzw. der Antrieb kann im Rahmen der vorgenannten Verstellung bei entsprechender Beschaltung außerdem bedarfsweise auf Einwirken von äußeren Kräften elastisch nachgeben, z.B. in der Art einer hydraulischen Feder, und dabei eine gewisse Gegenkraft oder Dämpfung entwickeln.

Der Koppelsteller (52) bzw. der Antrieb ist z.B. als hydraulischer Blockzylinder ausgebildet. Die vorgenannte Ausbildung und Anordnung der Koppeleinrichtung (48) ist schematisch in Figur 6 dargestellt. Hier ist auch die vorerwähnte Fixiereinrichtung (46) zu sehen, die in die Stelleinrichtung (17) eingebunden sein kann. Die Fixiereinrichtung (46) weist z.B. eine federnd vorgespannte Klemmung gegen die Führung (32) auf, die hydraulisch gelöst werden kann.

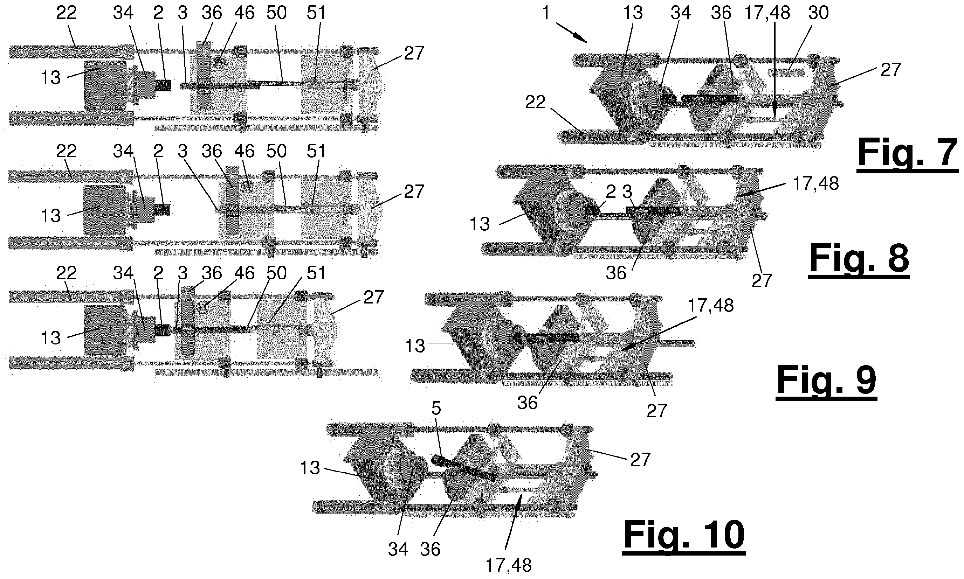

Figur 7 bis 10 verdeutlichen verschiedene Betriebsschritte bzw. Betriebsstellungen bei dem Betrieb der Stelleinrichtung (17). Bei Figur 7 bis 9 ist jeweils in der linken Darstellung eine Draufsicht und in der rechten Darstellung eine perspektivische Ansicht der Pressschweißvorrichtung (1) dargestellt.

Figur 7 verdeutlicht die Ausgangsstellung, in der ein Werker die zu verschweißenden Bauteile (2,3) in die Bauteilaufnahmen (34,36) eingelegt hat.

Wenn ein Typenwechsel der Bauteile (2,3) stattfindet, wobei die Bauteile (2,3) nun unterschiedliche Abmessungen, insbesondere unterschiedliche Längen, aufweisen, kann mit der Stelleinrichtung (17) eine automatische Längenanpassung der Pressschweißvorrichtung (1) durchgeführt werden. Die Längenanpassung kann ohne eingelegtes Bauteil (3) erfolgen.

Hierfür wird die Arretierung (51) geöffnet und der Stauchkopf (27) mit dem Stauchantrieb (22) zur zentralen Bauteilaufnahme (36) hin oder von dieser weg bewegt. Die Bauteilaufnahme (36) ist dabei mittels der Fixiereinrichtung (46) am Maschinengestell (12) fixiert. Die Ausgangspositionen der Bauteilaufnahme (36) und des Stauchkopfs (27) sowie der Fahrweg des Stauchkopfs (27) werden mittels der Erfassungseinrichtungen (33,47) detektiert. Die Fahrbewegung des Stauchkopfs (27) wird an der von der Maschinen- und Prozesssteuerung aus der Bauteillängendifferenz berechneten und vorgegebenen gestoppt. Beim Stopp wird die Arretierung (51) wieder geschlossen. Der Abstand zwischen Stauchkopf (27) und Bauteilaufnahme (36) ist damit neu eingestellt. Durch diese relative Fahrbewegung findet eine automatische Längenanpassungen bei einem maßrelevanten Bauteilwechsel statt.

Alternativ kann die Längenanpassung mit eingelegtem Bauteil (3) erfolgen, wobei die Fahrbewegung des Stauchkopfs (27) bei Kontakt des Bauteils (3) mit dem Stauchanschlag (28) oder einer evtl. eingelegten Stauchstange (30) gestoppt wird. Der Kontakt kann in beliebig geeigneter Weise detektiert werden, z.B. über einen Kraftanstieg am Stauchantrieb (22).

Figur 8 verdeutlicht die andere Verstellmöglichkeit der Stelleinrichtung (17), die durch den Koppelsteller (52) und die Abstandsverkürzung eine Kompensation von Einlege- oder Bauteiltoleranzen sowie evtl. prozessbedingte elastische Verformungen des aufgenommenen Bauteils (3) ermöglicht. Hierfür wird zunächst das Bauteil (3) an der Bauteilaufnahme (36) eingelegt, wobei ein Abstand zum Stauchanschlag (28) bzw. zur Stauchstange (30) auftreten kann. Bei geschlossener Arretierung (51) wird dann der Koppelsteller (52) betätigt und bewegt die Bauteilaufnahme (36) unter Abstandsverkürzung in Richtung zum stationär gehaltenen Stauchkopf (27), bis der Bauteilkontakt zwischen dem Bauteil (3) und dem Stauchanschlag (28) bzw. der Stauchstange (30) stattfindet und in geeigneter Weise detektiert wird.

Die Stellkraft des Koppelstellers (52) kann aufrecht erhalten werden, wobei eine weitere Bewegung des Koppelelements (50) durch den besagten Bauteilkontakt vorerst verhindert wird. Wenn im Pressschweißprozess unter der Stauchkraft eine elastische Verkürzung des Bauteils (3) an der Bauteilaufnahme (36) eintreten sollte, kann durch den Koppelsteller (52) der Abstand zwischen Stauchkopf (27) und Bauteilaufnahme (36) entsprechend verringert und angepasst werden.

Nach Durchführung der automatischen Längenanpassung bzw. der Aufnahme von Einlege- bzw. Bauteiltoleranzen startet der Pressschweißprozess, wobei der Stauchantrieb (22) den Stauchkopf (27) in Axialrichtung zum Maschinenkopf (13) hinbewegt. Die Kopppeleinrichtung (48) ist dabei blockiert, sodass der Stauchkopf (27) die Bauteilaufnahme (36) über das Koppelelement (50) mitnimmt und die Bauteile (2,3) in Berührungskontakt bringt, der wiederum in geeigneter Weise detektiert wird. Anschließend startet der Plastifizierungsprozess.

Beim Reibschweißen werden die Bauteile (2,3) vom Stauchantrieb (22) unter einer steuerbaren oder regelbaren Kraft axial zusammengepresst, wobei das in der Bauteilaufnahme (34) gehaltene Bauteil (2) um die Maschinenachse (6) gedreht wird. Durch die Reibungswärme an der Verbindungsstelle werden die Bauteilränder aufgeschmolzen. Anschließend erfolgt durch den Stauchantrieb (22) der Stauchhub. Beim Reiben und Stauchen findet eine Bauteilverkürzung und die Bildung eines Reibwulstes an der Verbindungsstelle der Bauteile (2,3) statt. Figur 9 verdeutlicht diesen Reibschweißprozess.

Figur 10 gibt die Folgestellung wieder, in welcher der Stauchantrieb (22) den Stauchkopf (27) unter Mitnahme der gekoppelten Bauteilaufnahme (36) wieder zurückfährt. Die Bauteilaufnahme(n) (34,36) ist/sind dabei geöffnet. Anschließend kann das Schweißteil (5) entnommen werden und ein Einlegen neuer Bauteile (2,3) erfolgen.

Wenn gemäß Figur 6 mit einem magnetisch bewegten Lichtbogen (63) geschweißt wird, werden in der vorerwähnten Weise durch die Bewegung des Stauchkopfes (27) zunächst die Bauteile (2,3) in Kontakt gebracht und anschließend wieder ein Stück axial distanziert, wobei zwischen den benachbarten Bauteilrändern der Lichtbogen (63) gezündet wird. Die Lichtbogeneinrichtung (10) weist zu diesem Zweck eine Stromquelle (nicht dargestellt) auf, welche für die nötige Spannung sorgt. Mittels einer Treibeinrichtung (64), z.B. einer Spulenanordnung, kann dann der Lichtbogen (63) umlaufend angetrieben werden und rotiert dabei um die Maschinenachse (6). Nach ausreichender Plastifizierung der Bauteilränder wird die Spannung abgeschaltet und der Stauchhub zur Verbindung der Bauteile (2,3) eingeleitet.

In den Ausführungsbeispielen von Figur 1 bis 5 ist eine Reibschweißvorrichtung (1) mit einer Reibeinrichtung (9) und mit weiteren Maschinenkomponenten dargestellt.

Die Reibeinrichtung (9) weist eine drehbare Welle (54), die nachfolgend als Spindel bezeichnet wird, mit der frontseitig angeordneten Bauteilaufnahme (34), einen Spindelstock (53) und einen Reibantrieb (56), insbesondere Spindelantrieb auf. Der Spindelstock (53) beinhaltet die Lagerung, Führung und Abstützung der Spindel (54) und ist am Maschinenkopf (13) angeordnet und abgestützt. Die Spindel (54) und die abtreibende Welle (59) des Spindelantriebs (56) sind durch einen Antriebsstrang (57) miteinander drehschlüssig verbunden.

Der Spindelantrieb (56) ist in der gezeigten Ausführungsform als Direktantrieb ausgebildet. Er weist einen Antriebsmotor (58) auf, dessen Motorwelle (59) im Wesentlichen fluchtend zur Längsachse der Spindel (54) und zur Maschinenachse (6) ausgerichtet ist. Desgleichen ist auch der Antriebsstrang (57) längs der Maschinenachse (6) ausgerichtet. Die Motorwelle (59) ist über eine Kupplung (62) mit der Spindel (54) oder einer nachfolgend erläuterten Betätigungseinrichtung (41) für die Bauteilaufnahme (34) gekoppelt. Die Kupplung (62) ist drehfest und biegelastisch ausgebildet. Sie kann evtl. Fluchtungsfehler, insbesondere Seitenversatz und/oder Schrägstellung, ausgleichen.

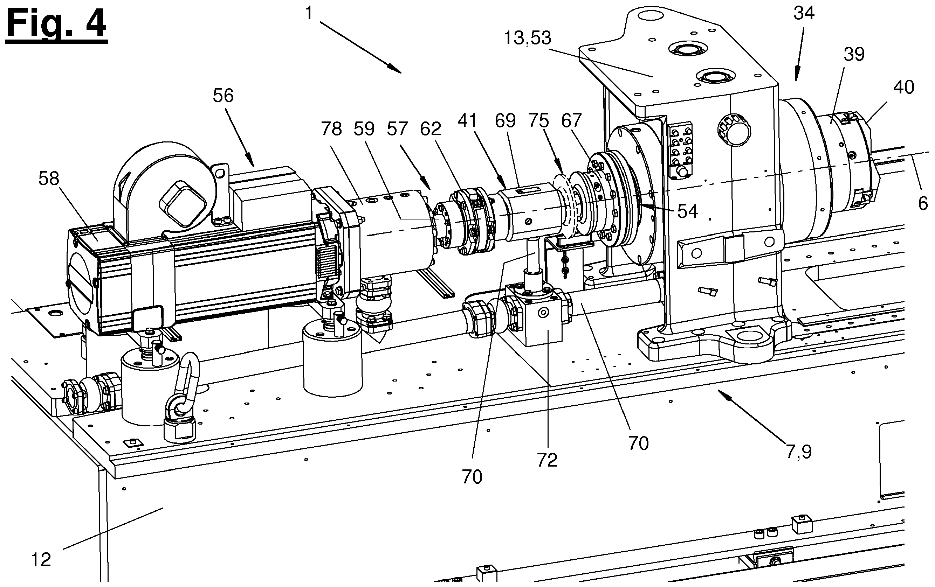

Im Antriebsstrang (57) zwischen Reibantrieb (56), insbesondere Spindelantrieb, und Spindel (54) können weitere Komponenten angeordnet sein. Dies kann z.B. eine in Figur 4 gezeigte steuerbare Bremse (78) sein, die als hydraulische Lamellenbremse oder als einfachere Motor-Haltebremse ausgebildet sein kann. Auch ein generatorisches Bremsen des Spindelantriebs (56) ist möglich.

In Abwandlung der gezeigten Ausführungsbeispiele kann der Antriebsmotor seitlich versetzt von der Spindel (54) sowie der Maschinenachse (6) angeordnet sein und über ein Vorgelege, insbesondere einen Riementrieb, die Spindel (54) antreiben.

In einer weiteren Abwandlung kann der Reib- oder Spindelantrieb (56) eine Schwungscheibenanordnung (nicht dargestellt) aufweisen. Die Schwungscheiben werden vom Antriebsmotor (58) in Rotation um die Maschinenachse (6) versetzt und bewirken dann einen Trägheitsantrieb für die Spindel (54), wobei eine steuerbare Bremse (78) die Drehzahl im Antriebsstrang (57) steuern oder regeln und ggf. die Drehung auch stillsetzen kann. Mittels einer Kupplung kann die Schwungscheibenanordnung vom Antriebsmotor (58) und ggf. von der Spindel (54) getrennt werden.

In Figur 1 bis 5 ist außerdem eine Ausführungsform der Pressschweißvorrichtung (1) dargestellt, bei der im Antriebsstrang (57) zwischen Spindelantrieb (56) und Spindel (54) eine Betätigungseinrichtung (41) für die Spanneinrichtung (39) an der Bauteilaufnahme (34) angeordnet ist. Der Betätigungsantrieb (65) ist dabei vorzugsweise mitdrehend im Antriebsstrang (57) angeordnet. Hierbei kann der Antriebsmotor (58) wieder als Direktantrieb vorgesehen und fluchtend zur Maschinen- und Spindelachse (6) ausgerichtet sein, was Vorteile hinsichtlich der freien Motorwahl und der dadurch gegebenen Wirtschaftlichkeit mit sich bringt.

Die Betätigungseinrichtung (41) weist einen Betätigungsantrieb (65) mit einem in Figur 1 angedeuteten Abtriebselement (66) auf, welches durch den Innenraum der hohlen Spindel (54) geführt ist und z.B. durch eine Axialbewegung auf die Stellmittel der Spannelemente (40) einwirkt. Die Stellbewegung kann mit einer Messeinrichtung (75) detektiert und gesteuert oder geregelt werden. Der z.B. hydraulische oder elektrische Betätigungsantrieb (65) besitzt ein mantelförmiges Antriebsgehäuse (67), welches einerseits mit der Motorwelle (59) und andererseits mit dem Mantel der hohlen Spindel (54) drehfest verbunden ist und das Antriebsmoment des Spindelantriebs (65) verformungs- und verlustfrei überträgt.

Die Betätigungseinrichtung (41) weist ferner eine Drehzuführung (69) für Betriebsmittel, z.B. Hydraulikflüssigkeit oder elektrischen Strom, von außen zu dem mit der Spindel (54) drehenden Betätigungsantrieb (65) auf. Hierzu ist ein Anschluss für einen nicht dargestellten Schlauch oder ein Kabel an einem stationären Zuführgehäuse der Drehzuführung (69) angeordnet. Ferner sind externe Leitungen (70) für eine Leckölabfuhr sowie ein Anschlusskopf (72) vorgesehen, der zugleich eine Stützfunktion für die Drehzuführung (69) haben kann. Im Innenraum oder im Mantel der Spindel (54) können interne Leitungen zu den ggf. in der Spindel (54) angeordneten Abtriebselementen (66), z.B. einer Kolbenanordnung, verlegt sein.

Die Betriebsmittelversorgung (19) weist im Falle eines hydraulischen Betätigungsantriebs (65) ein Pumpaggregat und eine Ventilanordnung zur Versorgung und Beschaltung des hydraulischen Betätigungsantriebs (65) und seines Abtriebselements (66) auf. Bei einem elektrischen Betätigungsantrieb (65) ist entsprechend eine Stromquelle und eine Schalteinrichtung vorhanden.

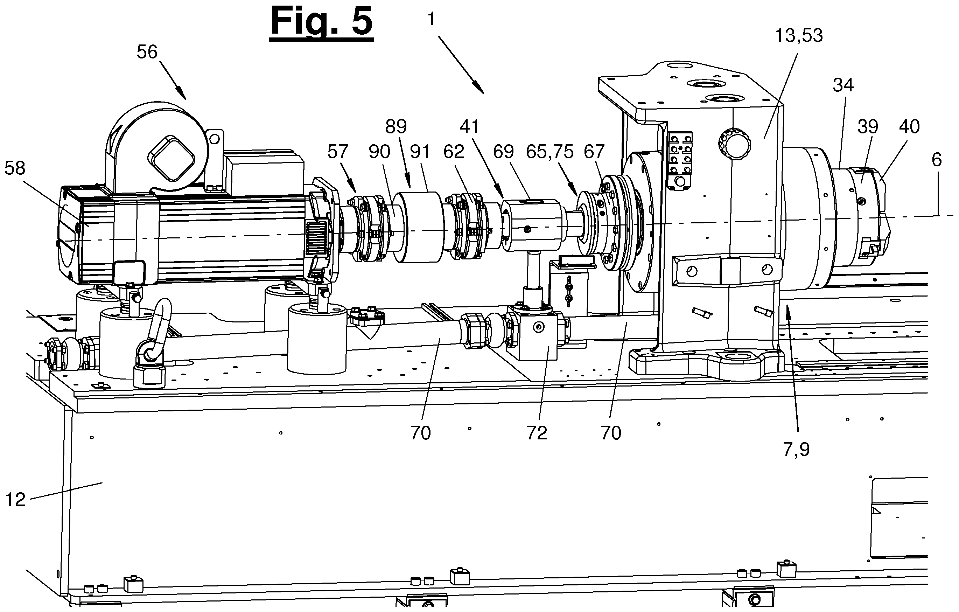

Figur 5 verdeutlicht außerdem eine Ausbildung, bei der im Antriebsstrang (57) zwischen dem Spindelantrieb (56) und der Spindel (54) eine Messeinrichtung (89) für die Erfassung des Antriebsmoments und ggf. der Antriebsdrehzahl angeordnet ist. Die Messeinrichtung (89) kann zwischen die Motorwelle (59) und die Spindel (54) bzw. die Betätigungseinrichtung (41) geschaltet sein.

Die Messeinrichtung (89) weist eine im Antriebsstrang (57) drehfest gekuppelte rotierende Messwelle (90) auf. Diese kann in beliebiger Weise konstruktiv und messtechnisch ausgebildet sein. Vorzugsweise erfolgt eine optische Messwerterfassung. Die Messwelle (90) kann an beliebiger Stelle im Antriebsstrang (57) angeordnet werden.

Im gezeigten Ausführungsbeispiel weist die Messwelle (90) einen Wellenkörper mit einem die Welle umgebenden, zentralen Messgehäuse (91) auf, das vorzugsweise stationär angeordnet ist. Der Wellenkörper ragt beidseits über das Messgehäuse (91) hinaus und ist mittels Kupplungen (62) drehfest mit der Antriebswelle (59) und der Spindel (54) oder ggf. der Betätigungseinrichtung (41) verbunden.

Die Messwelle (90) weist ein oder mehrere mitdrehende Messelemente auf dem Wellenkörper zur Erfassung von Torsionsspannungen auf, die von einer Detektionseinrichtung im Messgehäuse (91) erfasst und ggf. ausgewertet werden. Die Mess- oder Auswerteinformationen werden an die Maschinen- und Prozesssteuerung übermittelt. Die Messelemente können z.B. als inkrementale Ringscheiben ausgebildet sein, die drehfest und mit axialer Distanz mit der Welle verbunden sind und die eine Wellentorsion signalisieren. Alternativ können die Messelemente als Dehnmessstreifen oder in anderer Weise ausgebildet sein. Die gezeigte Messeinrichtung (89) kann z.B. gemäß der DE 198 48 068 C2 oder der DE 10 2010 034 638 A1 oder der DE 198 49 225 C1 ausgebildet sein.

Die Antriebs- oder Motorwelle (59) kann geteilt ausgebildet sein, wobei die Messwelle (90) zwischen die Wellenhälften eingesetzt ist. Alternativ kann die Antriebs- oder Motorwelle (59) mit geeigneten Messelementen versehen sein und die Messwelle (90) bilden.

In Figur 1 ist außerdem die Anordnung einer Bearbeitungseinrichtung (18) für das Schweißteil (5) oder für ein oder mehrere Bauteile (2,3) vor und/oder während des Schweißens dargestellt. Die Bearbeitungseinrichtung (18) ist z.B. als Abdreheinrichtung für den Schweißwulst am Schweißteil (5) ausgebildet. Sie kann außerdem die Stirnseiten von ein oder beiden Bauteilen (2,3) vor dem Schweißen plandrehen.

Für eine derartige Bearbeitung kann das Schweißteil (5) von der Bauteilaufnahme (34) bzw. vom Spindelantrieb (56) gedreht werden. In diesem Fall kann sich die Spanneinrichtung (39) der zentralen Bauteilaufnahme (36) öffnen. An der Bauteilaufnahme (36), insbesondere auf deren Träger (42), kann eine in Figur 6 schematisch dargestellte Bauteilabstützung (38) angeordnet sein, welche z.B. als Lünette mit Rollen ausgebildet ist und das drehende Schweißteil (5) abstützt.

Abwandlungen der gezeigten und beschriebenen Ausführungsbeispiele sind in verschiedener Weise möglich. Insbesondere können die Merkmale der verschiedenen Ausführungsbeispiele beliebig miteinander kombiniert und auch ausgetauscht werden. Der Stauchantrieb (22) kann in konventioneller Weise, z.B. gemäß des Eingangs genannten Standes der Technik, ausgeführt sein. Er kann außenseitig am Stauchkopf (27) und/oder ggf. am Maschinenkopf (13) angeordnet sein und Druckkräfte von außen aufbringen. Der Stauchkopf (27) kann dabei entsprechend modifiziert sein.

### BEZUGSZEICHENLISTE

- 1: Pressschweißvorrichtung, Reibschweißvorrichtung
- 2: Bauteil
- 3: Bauteil
- 3':
- 4:
- 5: Schweißteil
- 5':
- 6: Längsachse, Maschinenachse
- 7: Plastifiziereinrichtung
- 8: Staucheinrichtung
- 9: Reibeinrichtung
- 10: Lichtbogeneinrichtung
- 11: Halterung für Bauteile
- 12: Maschinengestell, Maschinenbett
- 13: Maschinenkopf
- 14:
- 15:
- 16:
- 17: Stelleinrichtung
- 18: Bearbeitungseinrichtung, Abdreheinrichtung
- 19: Betriebsmittelversorgung
- 20: Bedienbereich
- 21: Gehäuse
- 22: Stauchantrieb
- 23: Antriebseinheit, Zylinder
- 24: Antriebseinheit, Zylinder
- 25: Antriebsgehäuse, Zylindergehäuse
- 26: Antriebselement, Kolbenstange
- 27: Stauchkopf, Joch, Stützkopf
- 28: Stauchanschlag
- 29: Stütze
- 30: Stauchstange
- 31: Träger, Schlitten
- 32: Führung
- 33: Erfassungseinrichtung, Wegmesser
- 34: Bauteilaufnahme an Maschinenkopf
- 35:
- 36: Bauteilaufnahme, Zentralaufnahme
- 37:
- 38: Bauteilabstützung, Lünette
- 39: Spanneinrichtung, Spannfutter
- 40: Spannelement
- 41: Betätigungseinrichtung für Spannfutter
- 42: Träger, Schlitten
- 43:
- 44: Stütze
- 45: Lager, Gleitlager
- 46: Fixiereinrichtung
- 47: Erfassungseinrichtung, Wegmesser
- 48: Koppeleinrichtung für Zentralaufnahme/Stauchkopf
- 49:
- 50: Koppelelement, Koppelstange
- 51: Arretierung, Stangenklemmung
- 52: Koppelsteller, Antrieb, Blockzylinder
- 53: Spindelstock
- 54: Spindel
- 55: Innenraum
- 56: Reibantrieb, Spindelantrieb
- 57: Antriebsstrang
- 58: Antriebsmotor, Direktantrieb
- 59: Welle, Motorwelle
- 60:
- 61:
- 62: Kupplung, Drehkupplung
- 63: Lichtbogen
- 64: Treibeinrichtung
- 65: Betätigungsantrieb, Zylinder
- 66: Abtriebselement, Kolben, Spindel
- 67: Antriebsgehäuse
- 68:
- 69: Drehzuführung Betriebsmittel
- 70: Leitung, extern
- 71:
- 72: Anschlusskopf
- 73:
- 74:
- 75: Messeinrichtung
- 76: Messelement, Messscheibe
- 77: Messgerät
- 78: Bremse, Lamellenbremse
- 79:
- 80:
- 81:
- 82:
- 83:
- 84:
- 85:
- 86:
- 87:
- 88:
- 89: Messeinrichtung
- 90: Messwelle
- 91: Meßgehäuse, Einhausung

## Patentansprüche

1. Pressschweißvorrichtung mit einer Plastifizierungseinrichtung (7) und einer Staucheinrichtung (8) sowie einer Halterung (11) für die zu verschweißenden Bauteile (2,3) und einem Maschinengestell (12), wobei die Pressschweißvorrichtung (1) einen Maschinenkopf (13) und einen Stauchkopf (27) aufweist, die längs einer Maschinenachse (6) relativ zueinander beweglich sind und wobei die Halterung (11) eine Bauteilaufnahme (34) am Maschinenkopf (13) aufweist, wobei die Halterung (11) eine zwischen dem Maschinenkopf (13) und dem Stauchkopf (27) schwimmfähig am Maschinengestell (12) gelagerte Bauteilaufnahme (36) und eine automatische Stelleinrichtung (17) zur Anpassung an unterschiedliche Bauteilmaße, insbesondere Bauteillängen, aufweist, wobei die Staucheinrichtung (8) einen zwischen dem Maschinenkopf (13) und dem Stauchkopf (27) angeordneten und auf Zug wirkenden Stauchantrieb (22) mit zwei oder mehr parallelen Antriebseinheiten (23,24) aufweist, die längs und beidseitig neben der Maschinenachse (6) angeordnet sind.

2. Pressschweißvorrichtung nach Anspruch 1, **dadurch gekennzeichnet, dass** die Stelleinrichtung (17) eine steuerbare und längenveränderliche Koppeleinrichtung (48) zwischen der Bauteilaufnahme (36) und dem Stauchkopf (27) aufweist.

3. Pressschweißvorrichtung nach Anspruch 2, **dadurch gekennzeichnet, dass** die Koppeleinrichtung (48) ein zwischen der Bauteilaufnahme (36) und dem Stauchkopf (27) angeordnetes und beidseits verstellbar angebundenes Koppelelement (50), insbesondere eine Koppelstange, mit einer Arretierung (51) und einem Koppelsteller (52) aufweist.

4. Pressschweißvorrichtung nach Anspruch 3, **dadurch gekennzeichnet, dass** das Koppelelement (50) am einen Endbereich an der Arretierung (51) längsbeweglich und mit einer steuerbaren Klemmung aufgenommen ist, wobei das Koppelelement (50) am anderen Endbereich mit dem Koppelsteller (52) verbunden ist, wobei der Koppelsteller (52) einen Antrieb, insbesondere einen Blockzylinder, aufweist und das Koppelelement (50) längs der Maschinenachse (6) bedarfsweise verstellt oder blockiert.

5. Pressschweißvorrichtung nach Anspruch 3 oder 4, **dadurch gekennzeichnet, dass** die Stelleinrichtung (17) durch den Koppelsteller (52) und die Abstandsverkürzung Einlege- oder Bauteiltoleranzen sowie evtl. prozessbedingte elastische Verformungen des aufgenommenen Bauteils (3) kompensiert und/oder die Stelleinrichtung (17) bei geöffneter Arretierung (51) durch eine vom Stauchantrieb (22) bewirkte Relativbewegung und Abstandsänderung zwischen Bauteilaufnahme (36) und Stauchkopf (27) eine automatische Längenanpassung für verschiedene Bauteile (2,3) durchführt.

6. Pressschweißvorrichtung nach einem der vorhergehenden Ansprüche, **dadurch gekennzeichnet, dass** die Bauteilaufnahme (36) eine schaltbare Fixiereinrichtung (46) zur temporären Festlegung am Maschinengestell (12) aufweist.

7. Pressschweißvorrichtung nach einem der vorhergehenden Ansprüche, **dadurch gekennzeichnet, dass** der Maschinenkopf (13) stationär und der Stauchkopf (27) axial verfahrbar am Maschinengestell (12) angeordnet ist.

8. Pressschweißvorrichtung nach einem der vorhergehenden Ansprüche, **dadurch gekennzeichnet, dass** die Bauteilaufnahme (36) einen am Maschinengestell (12) axial verfahrbar gelagerten Träger (42) mit einer Spanneinrichtung (39) für das Bauteil (3) aufweist.

9. Pressschweißvorrichtung nach einem der vorhergehenden Ansprüche, **dadurch gekennzeichnet, dass** der Stauchkopf (27) und die Bauteilaufnahme (36) Erfassungseinrichtungen (33,47) für die Position und/oder den Weg aufweisen.

10. Pressschweißvorrichtung nach einem der vorhergehenden Ansprüche, **dadurch gekennzeichnet, dass** die Pressschweißvorrichtung (1) als Reibschweißvorrichtung ausgebildet ist, wobei die Plastifizierungseinrichtung (7) eine Reibeinrichtung (9) aufweist oder die Pressschweißvorrichtung (1) als Schweißvorrichtung mit einem magnetisch bewegten Lichtbogen (60) ausgebildet ist, wobei die Plastifizierungseinrichtung (7) eine Lichtbogeneinrichtung (10) aufweist.

11. Verfahren zum Pressschweißen von Bauteilen (2,3) mittels einer Pressschweißvorrichtung (1), die eine Plastifizierungseinrichtung (7) und eine Staucheinrichtung (8) sowie eine Halterung (11) für die zu verschweißenden Bauteile (2,3) und ein Maschinengestell (12) aufweist, wobei die Pressschweißvorrichtung (1) einen Maschinenkopf (13) und einen Stauchkopf (27) aufweist, die längs einer Maschinenachse (6) relativ zueinander bewegt werden und wobei die Halterung (11) eine Bauteilaufnahme (34) am Maschinenkopf (13) aufweist, wobei die Halterung (11) eine zwischen dem Maschinenkopf (13) und dem Stauchkopf (27) schwimmfähig am Maschinengestell (12) gelagerte Bauteilaufnahme (36) und eine automatische Stelleinrichtung (17) aufweist, mit der die Pressschweißvorrichtung (1) an unterschiedliche Bauteilmaße, insbesondere Bauteillängen, angepasst wird, wobei die Staucheinrichtung (8) einen zwischen dem Maschinenkopf (13) und dem Stauchkopf (27) angeordneten und auf Zug wirkenden Stauchantrieb (22) mit zwei oder mehr parallelen Antriebseinheiten (23,24) aufweist, die längs und beidseitig neben der Maschinenachse (6) angeordnet sind.

12. Verfahren nach Anspruch 11, **dadurch gekennzeichnet, dass** der Abstand zwischen dem Stauchkopf (27) und der Bauteilaufnahme (36) für die Anpassung an unterschiedliche Bauteilmaße geändert wird, insbesondere mittels einer steuerbaren und längenveränderlichen Koppeleinrichtung (48).

13. Verfahren nach Anspruch 11 oder 12, **dadurch gekennzeichnet, dass** für eine Grobverstellung zur Anpassung an unterschiedliche Längenmaße verschiedener Bauteile (2,3) der Stauchkopf (27) gegenüber der temporär am Maschinengestell (12) fixierten Bauteilaufnahme (36) durch den Stauchantrieb (22) verfahren wird.

14. Verfahren nach einem der Ansprüche 12 bis 13, **dadurch gekennzeichnet, dass** kleinere Änderungen der Bauteilmaße über einen Koppelsteller (52) der Koppeleinrichtung (48) kompensiert werden.

15. Verfahren nach einem der Ansprüche 11 bis 14, **dadurch gekennzeichnet, dass** die zu verschweißenden Bauteile (2,3) an ihren einander zugekehrten Stirnrändern durch Reibung oder durch einen umlaufend bewegten Lichtbogen plastifiziert werden.

## Claims

1. Press welding device having a plasticizing device (7)and a compressing device (8) and also a holder (11) for the components (2, 3) to be welded and a machine frame (12), wherein the press welding device (1) has a machine head (13) and a compressing head (27) which are movable relative to one another along a machine axis (6) and wherein the holder (11) has a component mount (34) on the machine head (13), wherein the holder (11) has a component mount (36), which is mounted in a floating manner on the machine frame (12) between the machine head (13) and the compressing head (27), and an automatic adjusting device (17) for adaptation to different component dimensions, in particular component lengths, wherein the compressing device (8) has a compressing drive (22) with two or more parallel drive units (23, 24) which is arranged between the machine head (13) and the compressing head (27) and which acts in tension, which drive units are arranged longitudinally and on both sides next to the machine axis (6).

2. Press welding device according to Claim 1, **characterized in that** the adjusting device (17) has a controllable and length-adjustable coupling device (48) between the component mount (36) and the compressing head (27).

3. Press welding device according to Claim 2, **characterized in that** coupling device (48) has a coupling element (50) which is arranged between the component mount (36) and the compressing head (27) and which is attached adjustably on both sides, in particular a coupling rod, with an arresting means (51) and a coupling actuator (52).

4. Press welding device according to Claim 3, **characterized in that** the coupling element (50) is longitudinally movable at an end region on the arresting means (51) and received with a controllable clamping, wherein the coupling element (50) is connected at the other end region to the coupling actuator (52), wherein the coupling actuator (52) has a drive, in particular a block cylinder, and adjusts or blocks the coupling element (50) along the machine axis (6) as required.

5. Press welding device according to Claim 3 or 4, **characterized in that**, by virtue of the coupling actuator (52) and the distance shortening, the adjusting device (17) compensates for insertion or component tolerances and any process-related elastic deformations of the received component (3) and/or the adjusting device (17), with the arresting means (51) opened, carries out an automatic length adaptation for different components (2, 3) by a relative movement caused by the compressing drive (22) and change of distance between component mount (36) and compressing head (27).

6. Press welding device according to one of the preceding claims, **characterized in that** the component mount (36) has a switchable fixing device (46) for temporary fixing on the machine frame (12).

7. Press welding device according to one of the preceding claims, **characterized in that** machine head (13) is arranged in a stationary manner on the machine frame (12), and the compressing head (27) is arranged in an axially movable manner on the machine frame (12).

8. Press welding device according to one of the preceding claims, **characterized in that** the component mount (36) has a carrier (42) which is mounted in an axially movable manner on the machine frame (12) and which has a clamping device (39) for the component (3).

9. Press welding device according to one of the preceding claims, **characterized in that** the compressing head (27) and the component mount (36) have detection devices (33, 47) for the position and/or the travel.

10. Press welding device according to one of the preceding claims, **characterized in that** the press welding device (1) is designed as a friction welding device, wherein the plasticizing device (7) has a friction device (9), or the press welding device (1) is designed as a welding device with a magnetically moved electric arc (60), wherein the plasticizing device (7) has an electric arc device (10).

11. Method for press welding components (2, 3) by means of a press welding device (1) which has a plasticizing device (7) and a compressing device (8) and also holder (11) for the components (2, 3) to be welded and a machine frame (12), wherein the press welding device (1) has a machine head (13) and a compressing head (27) which are moved relative to one another along a machine axis (6) and wherein the holder (11) has a component mount (34) on the machine head (13), wherein the holder (11) has a component mount (36), which is mounted in a floating manner on the machine frame (12) between the machine head (13) and the compressing head (27), and an automatic adjusting device (17) by means of which the press welding device (1) is adapted to different component dimensions, in particular component lengths, wherein the compressing device (8) has a compressing drive (22) with two or more parallel drive units (23, 24) which is arranged between the machine head (13) and the compressing head (27) and which acts in tension, which drive units are arranged longitudinally and on both sides next to the machine axis (6).

12. Method according to Claim 11, **characterized in that** the distance between the compressing head (27) and the component mount (36) is changed for adaptation to different component dimensions, in particular by means of a controllable and length-adjustable coupling device (48).

13. Method according to Claim 11 or 12, **characterized in that**, for a rough adjustment for adaptation to different length dimensions of different components (2, 3), the compressing head (27) is moved by the compressing drive (22) with respect to the component mount (36) fixed temporary on the machine frame (12).

14. Method according to either of Claims 12 and 13, **characterized in that** smaller changes in the component dimensions are compensated for via a coupling actuator (52) of the coupling device (48) .

15. Method according to one of Claims 11 to 14, **characterized in that** the components (2, 3) to be welded are plasticized at their mutually facing end edges by friction or by an electric arch moved in an encircling manner.

## Revendications

1. Dispositif de soudage par pressage comprenant un dispositif de plastification (7) et un dispositif de compression (8) ainsi qu'une fixation (11) pour les composants à souder (2, 3) et un bâti de machine (12), le dispositif de soudage par pressage (1) présentant une tête de machine (13) et une tête de compression (27) qui peuvent être déplacées l'une par rapport à l'autre le long d'un axe de machine (6), et la fixation (11) présentant un logement de composant (34) sur la tête de machine (13), la fixation (11) présentant un logement de composant (36) supporté entre la tête de machine (13) et la tête de compression (27) de manière flottante au niveau du bâti de machine (12) et un dispositif de réglage automatique (17) pour l'adaptation à différentes dimensions des composants, en particulier à différentes longueurs des composants, le dispositif de compression (8) présentant un entraînement de compression (22) disposé entre la tête de machine (13) et la tête de compression (27) et agissant en traction, avec deux ou plus de deux unités d'entraînement parallèles (23, 24) qui sont disposées longitudinalement et des deux côtés à côté de l'axe de machine (6).

2. Dispositif de soudage par pressage selon la revendication 1, **caractérisé en ce que** le dispositif de réglage (17) présente un dispositif de couplage commandable et de longueur variable (48) entre le logement de composant (36) et la tête de compression (27).

3. Dispositif de soudage par pressage selon la revendication 2, **caractérisé en ce que** le dispositif de couplage (48) présente un élément de couplage (50) disposé entre le logement de composant (36) et la tête de compression (27) et relié des deux côtés de manière réglable, en particulier une barre de couplage, avec un blocage (51) et un actionneur de couplage (52).

4. Dispositif de soudage par pressage selon la revendication 3, **caractérisé en ce que** l'élément de couplage (50) est reçu au niveau de l'une des régions d'extrémité sur le blocage (51) de manière déplaçable longitudinalement et avec un serrage commandable, l'élément de couplage (50) étant raccordé au niveau de l'autre région d'extrémité à l'actionneur de couplage (52), l'actionneur de couplage (52) présentant un entraînement, en particulier un cylindre de blocage et l'élément de couplage (50) étant réglé ou bloqué, selon les besoins, le long de l'axe de machine (6).

5. Dispositif de soudage par pressage selon la revendication 3 ou 4, **caractérisé en ce que** le dispositif de réglage (17) compense, par le biais de l'actionneur de couplage (52) et du raccourcissement de la distance, les tolérances d'insertion ou des composants ainsi que les déformations élastiques, provoquées éventuellement par le processus, du composant reçu (3) et/ou le dispositif de réglage (17), lorsque le blocage (51) est ouvert, effectue par le biais d'un mouvement relatif provoqué par l'entraînement de compression (22) et de la variation de distance entre le logement de composant (36) et la tête de compression (27), une adaptation de longueur automatique pour différents composants (2, 3).

6. Dispositif de soudage par pressage selon l'une quelconque des revendications précédentes, **caractérisé en ce que** le logement de composant (36) présente un dispositif de fixation commutable (46) pour la fixation temporaire au bâti de machine (12).

7. Dispositif de soudage par pressage selon l'une quelconque des revendications précédentes, **caractérisé en ce que** la tête de machine (13) est disposée de manière stationnaire et la tête de compression (27) est disposée de manière déplaçable axialement sur le bâti de machine (12).

8. Dispositif de soudage par pressage selon l'une quelconque des revendications précédentes, **caractérisé en ce que** le logement de composant (36) présente un support (42) supporté de manière déplaçable axialement sur le bâti de machine (12) avec un dispositif de serrage (39) pour le composant (3).

9. Dispositif de soudage par pressage selon l'une quelconque des revendications précédentes, **caractérisé en ce que** la tête de compression (27) et le logement de composant (36) présentent des dispositifs de détection (33, 47) de position et/ou de déplacement.

10. Dispositif de soudage par pressage selon l'une quelconque des revendications précédentes, **caractérisé en ce que** le dispositif de soudage par pressage (1) est réalisé sous forme de dispositif de soudage par friction, le dispositif de plastification (7) présentant un dispositif de friction (9) ou le dispositif de soudage par pressage (1) étant réalisé sous forme de dispositif de soudage avec un arc électrique déplacé magnétiquement (60), le dispositif de plastification (7) présentant un dispositif d'arc électrique (10).

11. Procédé de soudage par pressage de composants (2, 3) au moyen d'un dispositif de soudage par pressage (1) qui présente un dispositif de plastification (7) et un dispositif de compression (8) ainsi qu'une fixation (11) pour les composants à souder (2, 3) et un bâti de machine (12), le dispositif de soudage par pressage (1) présentant une tête de machine (13) et une tête de compression (27) qui sont déplacées l'une par rapport à l'autre le long d'un axe de machine (6), et la fixation (11) présentant un logement de composant (34) sur la tête de machine (13), la fixation (11) présentant un logement de composant (36) supporté entre la tête de machine (13) et la tête de compression (27) de manière flottante au niveau du bâti de machine (12) et un dispositif de réglage automatique (17) avec lequel le dispositif de soudage par pressage (1) est adapté à différentes dimensions des composants, en particulier à différentes longueurs des composants, le dispositif de compression (8) présentant un entraînement de compression (22) disposé entre la tête de machine (13) et la tête de compression (27) et agissant en traction, avec deux ou plus de deux unités d'entraînement parallèles (23, 24) qui sont disposées longitudinalement et des deux côtés à côté de l'axe de machine (6).

12. Procédé selon la revendication 11, **caractérisé en ce que** la distance entre la tête de compression (27) et le logement de composant (36) est modifiée pour l'adaptation à différentes dimensions des composants, en particulier au moyen d'un dispositif d'accouplement (48) commandable et de longueur variable.

13. Procédé selon la revendication 11 ou 12, **caractérisé en ce que** pour un réglage grossier pour l'adaptation à différentes dimensions en longueur de différents composants (2, 3), la tête de compression (27) est déplacée par l'entraînement de compression (22) par rapport au logement de composant (36) fixé temporairement au bâti de machine (12).

14. Procédé selon l'une quelconque des revendications 12 et 13, **caractérisé en ce que** de petites variations des dimensions des composants sont compensées par un actionneur de couplage (52) du dispositif d'accouplement (48).

15. Procédé selon l'une quelconque des revendications 11 à 14, **caractérisé en ce que** les composants à souder (2, 3) sont plastifiés au niveau de leurs bords frontaux tournés l'un vers l'autre par friction ou par un arc électrique déplacé circonférentiellement.
